# EUROPEAN PATENT APPLICATION

(11) **EP 2 783 942 A1**
(43) Date of publication of application: **01.10.2014**
(21) Application number: 13190564.8
(22) Date of filing: 29.10.2013
(51) Int. Cl.: B62D 5/04, H01R 4/30, H01R 4/64, H01R 11/12

(54) **Steering apparatus**

(30) Priority: 27.03.2013 JP 2013067508
(71) Applicant: Showa Corporation, Gyoda City Saitama 361-8506 (JP)
(72) Inventor: Inoue, Taro, Tochigi 321-3315 (JP)
(74) Representative: Nordmeyer, Philipp Werner

(57) **Abstract**

An object of the present invention is to provide to suppress deformation of a terminal member caused by abutting contact of the terminal member with a housing side during attachment of the terminal member to the housing (12). When a terminal bolt (28) is mounted, a ground terminal (80) rotates in conjunction with rotation of the terminal bolt. In this case, a side edge (80E) of an abutting portion (80B), which is formed like a plate, comes into abutting contact with a side surface (183) of the housing. At this time, a side edge (80F) of the terminal main body (80A), which is also formed like a plate, also comes into abutting contact with the side surface (183). Thus, the rotation of the ground terminal is regulated.

## Description

### BACKGROUND OF THE INVENTION

### 1. Field of the Invention

The present invention relates to a steering apparatus.

### 2. Description of the Background Art

For example, Japanese Patent Application Laid-open No. 2007-223541 discloses, as a conventional technique described in the patent gazette, a steering apparatus including a rack shaft interlocked with a steering input shaft and movably accommodated in a cylinder pipe provided in a steering gear housing, and a tie rod connected to the rack shaft at an end thereof via a joint.

Patent Document 1: Japanese Patent Application Laid-open No. 2007-223541

### SUMMARY OF THE INVENTION

In a steering apparatus, a screw member may be used to fix a terminal member to a housing, but the terminal member may rotate in conjunction with rotation of the screw member. In this case, the rotation of the terminal member can be suppressed by bringing a part of the terminal member into abutting contact with the housing side. However, a heavy load may act on the portion with which the part of the terminal member comes into abutting contact. In this case, the terminal member is likely to be deformed.
An object of the present invention is to suppress deformation of the terminal member caused by the abutting contact of the terminal member with the housing side during attachment of the terminal member to the housing.

To achieve this object, an aspect of the present invention provides a steering apparatus including a housing accommodating a steering function section, a terminal member fixed to the housing, and a screw member including a head portion and fixing the terminal member to the housing, with the terminal member being sandwiched between the head portion and the housing, wherein the terminal member includes a first area sandwiched between the head portion of the screw member and the housing and disposed to extend in a radial direction of the screw member and a second area connected to the first area and disposed to extend in a direction different from the direction in which the first area extends, and when the terminal member rotates in conjunction with rotation of the screw member, the first area and the second area come into abutting contact with a side of the housing.

The housing includes: a first outer surface extending along the radial direction of the screw member; a second outer surface connected to the first outer surface and extending along an axial direction of the screw member; and a third outer surface connected to the first outer surface via a step, disposed at a position lower than the first outer surface and extending in the radial direction of the screw member, the first area and the second area of the terminal member are configured to come into abutting contact with the second outer surface of the housing, and the first area is supported by the third outer surface and is disposed closer to the third outer surface than to the first outer surface, so that the first area comes into abutting contact with the second outer surface. In this case, the first area is brought into abutting contact with the second outer surface extending along the axial direction of the screw member.
Furthermore, the first area of the terminal member is disposed along an outer surface of the housing, a projecting portion is formed on the outer surface of the housing, and the first area is brought into abutting contact with the projecting portion formed on the outer surface of the housing thereby achieving the abutting contact with the side of the housing. In this case, even when the first area is configured to extend along the outer surface of the housing, the first area can be brought into abutting contact with the side of the housing.
Additionally, the terminal member is configured so that a direction in which the first area extends is orthogonal to a direction in which the second area extends or the terminal member is configured so that an angle between the direction in which the first area extends and the direction in which the second area extends is an acute angle. This enables a reduction in a dimension of the terminal member in the direction in which the first area extends compared to a case where an obtuse angle is formed between the direction in which the first area extends and the direction in which the second area extends.

Another aspect of the steering apparatus to which the preset invention is applied is a steering apparatus to which a terminal member is attached and which has a first area disposed to extend in one direction and a second area connected to the first area and disposed to extend in a direction different from the direction in which the first area extends, the steering apparatus including a housing to which the first area of the terminal member is fixed by a screw member and an abutted portion with which the first area and the second area of the terminal member come into abutting contact when the terminal member rotates in conjunction with rotation of the screw member.

The aspects of the present invention can suppress deformation of the terminal member caused by the abutting contact of the terminal member with the housing side during attachment of the terminal member to the housing.

### BRIEF DESCRIPTION OF THE DRAWINGS

FIG. 1 is a general diagram of a configuration of an electric power steering apparatus to which the present embodiment is applied;
FIG. 2 is a diagram illustrating a configuration of a transmission mechanism section of the electric power steering apparatus to which the present embodiment is applied;
FIG 3 is a diagram illustrating a configuration of an assist section of the electric power steering apparatus to which the present embodiment is applied;
FIG. 4 is a perspective view of the structure of a periphery of a second housing as viewed from above;
FIG. 5 is a diagram showing a comparative example of a ground terminal and the second housing; and
FIG. 6 is a diagram showing another example of configuration of the second housing.

### DESCRIPTION OF THE PREFERRED EMBODIMENTS

An embodiment of the present invention will be described below with reference to the attached drawings.

### [General configuration of the power steering apparatus]

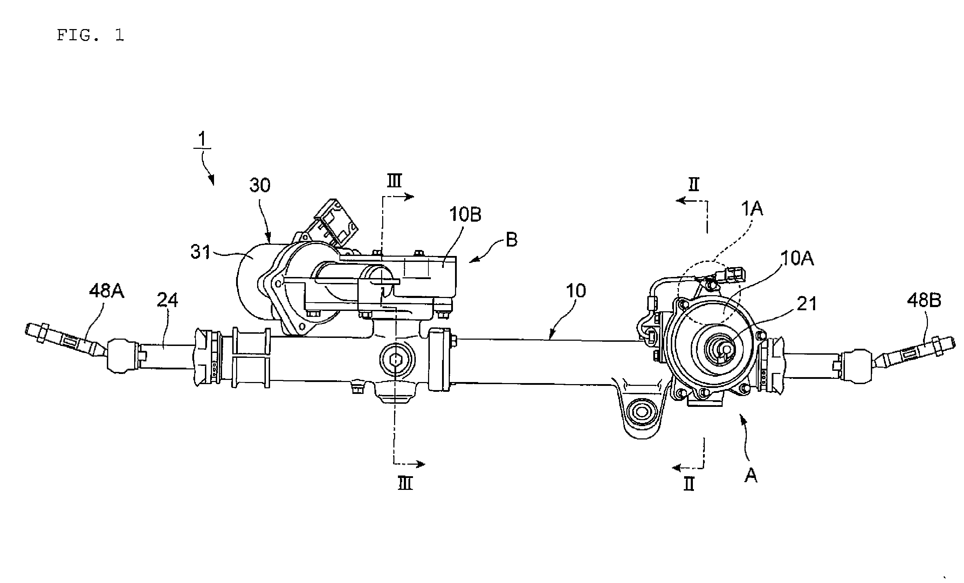

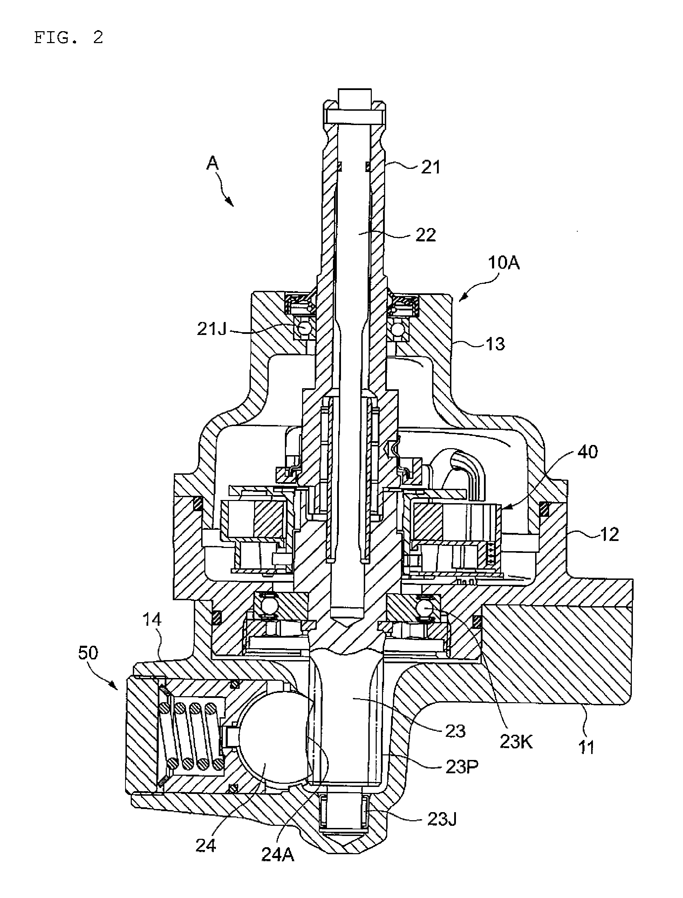

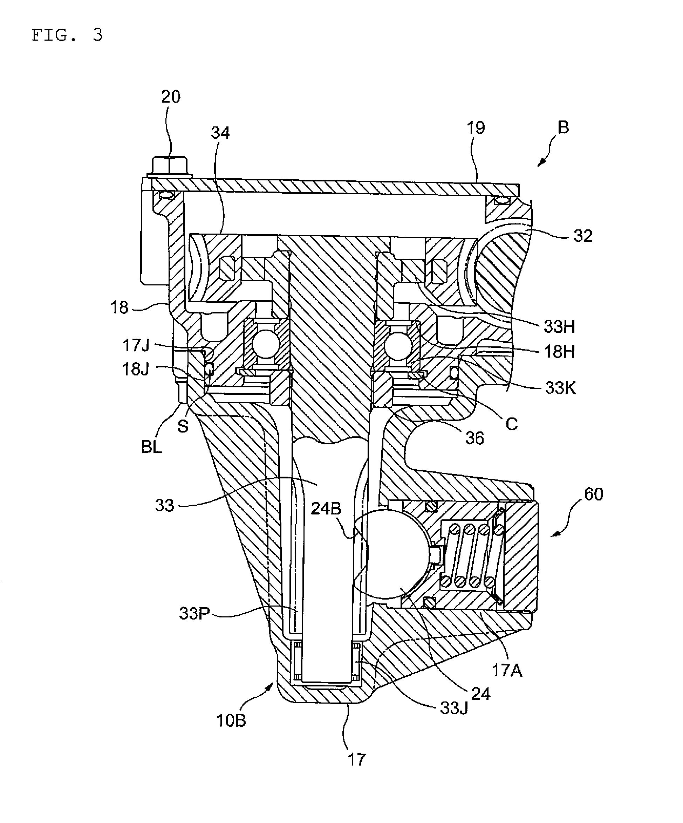

FIG. 1 is a general diagram of a configuration of an electric power steering apparatus 1 to which the present embodiment is applied. FIG. 2 is a diagram illustrating a configuration of a transmission mechanism section A of the electric power steering apparatus 1 to which the present embodiment is applied; the diagram is taken along line II-II in FIG. 1. FIG. 3 is a diagram illustrating a configuration of an assist section B of the electric power steering apparatus 1 to which the present embodiment is applied; the diagram is taken along line III-III in FIG. 1.

As shown in FIG. 1, the electric power steering apparatus 1 to which the present embodiment is applied is of what is called a double pinion type. The electric power steering apparatus 1 has a transmission mechanism section A that transmits steering force from a steering section (steering wheel) to a rack shaft 24 and an assist section B that transmits a steering assist force from a driving section 30 to the rack shaft 24 to assist movement of the rack shaft 24. The rack shaft 24, the transmission mechanism section A, and the like function as a part of a steering function section that changes the direction of a steered portion, for example, tires (not shown in the drawings).

For example, a gear housing 10 fixed to a vehicle body frame (not shown in the drawings) has a steering wheel side gear housing 10A forming the transmission mechanism section A and an assist side gear housing 10B forming the assist section B as shown in FIG 1. The steering wheel side gear housing 10A and the assist side gear housing 10B are connected together around the rack shaft 24 to form the gear housing 10.
The steering wheel side gear housing 10A supports an input shaft 21 and a steering wheel side pinion shaft 23 (see FIG. 2) that is an output shaft so that the input shaft 21 and the steering wheel side pinion shaft 23 are rotatable. The input shaft 21 is connected to an upper shaft (not shown in the drawings) connected to a steering wheel (not shown in the drawings).

On the other hand, the assist side gear housing 10B supports an assist side pinion shaft 33 (see FIG. 3) so that the assist side pinion shaft 33 is rotatable. A left tie rod 48A and a right tie rod 48B are connected to respective opposite ends of the rack shaft 24. The tie rods 48A and 48B are connected to respective steered portions, for example, tires (not shown in the drawings), via respective knuckle arms (not shown in the drawings). Furthermore, the rack shaft 24 is supported by a bearing provided in a first housing 11 (see FIG. 2) of the steering wheel side gear housing 10A and a bearing provided in a first housing 17 (see FIG. 3) of the assist side gear housing 10B so that the rack shaft 24 can slide appropriately in the lateral direction of FIG. 1.

### [Configuration and functions of the transmission mechanism section A]

As shown in FIG. 2, the steering wheel side gear housing 10A of the transmission mechanism section A is divided into a first housing 11, a second housing 12, and a third housing 13, which are assembled together to form a housing. The first housing 11, the second housing 12, and the third housing 13 are fixed together by fixing bolts (not shown in the drawings).
As shown in FIG. 2, the transmission mechanism section A has the input shaft 21 connected to the steering wheel (not shown in the drawings). Furthermore, the transmission mechanism section A has the steering wheel side pinion shaft (output shaft) 23 connected to the input shaft 21 via a torsion bar 22 coaxially with the input shaft 2.

Moreover, the steering wheel side pinion shaft 23 has a pinion 23P meshed with a steering wheel side rack 24A of the rack shaft 24. Thus, the rack shaft 24 can move linearly according to a steering torque applied to the steering wheel, and moves in the lateral direction of the gear housing 10 shown in FIG. 1.

Furthermore, the input shaft 21 is held by a bearing 21J provided in the third housing 13 of the steering wheel side gear housing 10A. The steering wheel side pinion shaft 23 is held by a bearing 23J provided in the first housing 11 of the steering wheel side gear housing 10A and a bearing 23K provided in the second housing 12.
Additionally, a rack guide 50 is provided in the first housing 11 of the steering wheel side gear housing 10A and presses the steering wheel side rack 24A of the rack shaft 24 against the pinion 23P of the steering wheel side pinion shaft 23 and supports the rack shaft 24 so that the rack shaft 24 can slide freely. The rack guide 50 is inserted into the cylinder section 14 of the first housing 11.

Moreover, the transmission mechanism section A includes a torque detection device 40 that detects a relative rotation angle between the input shaft 21 and the steering wheel side pinion shaft (output shaft) 23 to detect a steering torque based on the detected relative rotation angle. The torque detection device 40 transmits the result of detection of the steering torque to an electronic control unit (ECU). Then, the ECU controls the driving section 30 (see FIG. 1) of the assist section B based on the result of detection of the steering torque acquired from the torque detection device 40.

### [Configuration and functions of the assist section B]

As shown in FIG. 3, the assist section B includes the assist side gear housing 10B, the assist side pinion shaft 33, a worm wheel 34 connected to the assist side pinion shaft 33, and the driving section 30 (see FIG. 1) rotationally driving the worm wheel 34. Moreover, the assist section B has a rack guide 60 that guides movement of the rack shaft 24 connected to the assist side pinion shaft 33.

As shown in FIG. 3, the assist side gear housing 10B is divided into the first housing 17 and the second housing 18, which are assembled together to form a housing. Moreover, a cover member 19 is assembled to the second housing 18.
Each of the first housing 17 and the second housing 18 is a member having an internal cylindrical space. The first housing 17 mainly forms a housing at a connection portion between the assist side pinion shaft 33 and the rack shaft 24. Furthermore, the second housing 18 mainly forms a housing at a connection portion between the assist side pinion shaft 33 and the worm wheel 34.

The first housing 17 has a fitting portion 17J forming a fitting area where the first housing 17 and the second housing 18 are fitted together. Furthermore, the second housing 18 has a fitting portion 18J forming a fitting area where the second housing 18 and the first housing 17 are fitted together. According to the present embodiment, the fitting portion 18J has an outer diameter slightly smaller than the inner diameter of the fitting portion 17J.
The first housing 17 and the second housing 18 are fitted together by inserting the fitting portion 18J into the fitting portion 17J with a seal member S sandwiched between the first housing 17 and the second housing 18. Furthermore, the first housing 17 and the second housing 18 are fixed together by a fixing bolt BL. Additionally, the cover member 19 is fixed to the second housing 18 by a fixing bolt 20 as shown in FIG. 3. The cover member 19 is provided so as to cover an opening in the first housing 17.

When mounted in a vehicle, the assist side pinion shaft 33 is disposed to cross the vertical direction. According to the present embodiment, the assist side pinion shaft 33 is arranged approximately in the horizontal direction along a front-back direction of the vehicle (see FIG. 1).
As shown in FIG. 3, the assist side pinion shaft 33 has a pinion 33P. The pinion 33P of the assist side pinion shaft 33 is connected to an assist side rack 24B of the rack shaft 24. In the assist section B according to the present embodiment, both or at least one of the pinion 33P of the assist side pinion shaft 33 and the assist side rack 24B of the rack shaft 24 is a helical gear with a tooth trace obliquely crossing the central axis of the gear. The assist side pinion shaft 33 according to the present embodiment is formed of metal.
Furthermore, the assist side pinion shaft 33 includes the worm wheel 34. The assist side pinion shaft 33 rotates under a rotational driving force from the driving section 30 via the worm wheel 34.

The assist side pinion shaft 33 is held, at one end side, by a first bearing 33J provided in the first housing 17 and, at the other end side, by a second bearing 33K provided in the second housing 18.
An inner ring of the second bearing 33K is attached to an outer periphery of the assist side pinion shaft 33 so as to be sandwiched between a hub 33H and a lock nut 36 of the assist side pinion shaft 33. Furthermore, an outer ring of the second bearing 33K is fixed to the second housing 18 so as to be sandwiched between a holding section 18H and a circlip C formed in the second housing 18.
On the other hand, an outer ring of the first bearing 33J is press-fitted in the first housing 17. One end portion of the assist side pinion shaft 33 is clearance-fitted in an inner ring of the first bearing 33J.

Since the assist side pinion shaft 33 is held by the first bearing 33J press-fitted in the first housing 17, movement of the assist side pinion shaft 33 toward the first housing 17 is limited.
Furthermore, the inner ring of the second bearing 33K is fixed to the assist side pinion shaft 33 by the lock nut 36 in the form of an embedded screw. The outer ring of the second bearing 33K is fixed to the holding section 18H of the second housing 18 by the circlip C. This limits movement of the assist side pinion shaft 33 toward the second housing 18.
As described above, the assist side pinion shaft 33 is rotatably held in the assist side gear housing 10B and mounted so as not to move in the axial direction.

The worm wheel 34 is provided at an end of the assist side pinion shaft 33 which is opposite the end thereof where the pinion 33P is formed. A rotating shaft of the worm wheel 34 is formed coaxially with the assist side pinion shaft 33. As shown in FIG. 3, the worm wheel 34 meshes with a worm gear 32 of the driving section 30. The worm wheel 34 according to the present embodiment is formed of resin molded integrally with the hub 33H of the metallic assist side pinion shaft 33.

Furthermore, the rack guide 60 is mounted in the first housing 17 of the assist side gear housing 10B to press the assist side rack 24B of the rack shaft 24 against the pinion 33P of the assist side pinion shaft 33 and to support the rack shaft 24 so that the rack shaft 24 can slide freely. The rack guide 60 is inserted into a cylinder section 17A of the first housing 17.

As shown in FIG. 1, the driving section 30 has an electric motor 31 and the worm gear 32 (see FIG. 3) rotationally driven by the electric motor 31. The electric motor 31 is driven by the ECU (not shown in the drawings) in a controllable manner in accordance with the result of detection by the torque detection device 40 (see FIG. 2). Furthermore, as shown in FIG. 3, the worm gear 32 is connected to the worm wheel 34 to transmit an output torque from the electric motor 31 to the worm wheel 34.

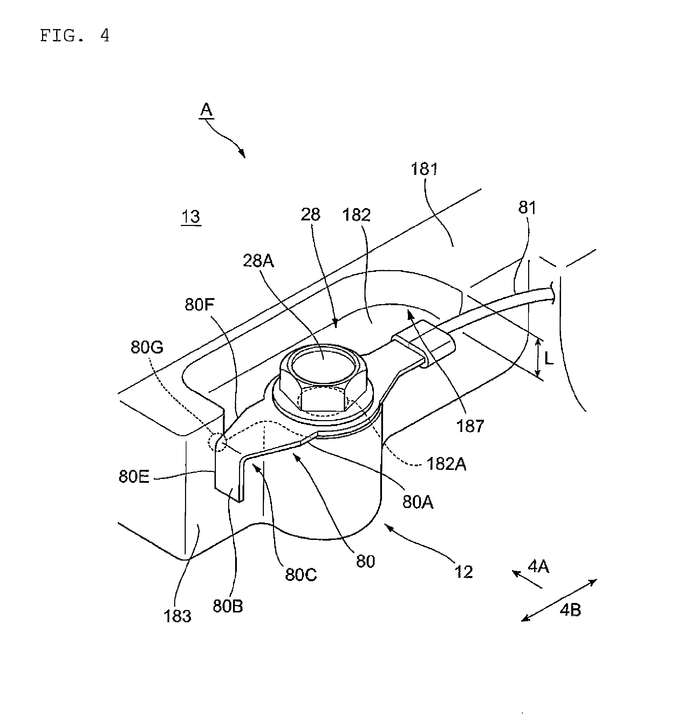

FIG. 4 is a perspective view of the structure of a periphery of the second housing 12 shown in FIG. 2. Additionally, FIG. 4 is a perspective view of an area shown by reference numeral 1A in FIG. 1 as viewed from obliquely above.
Although not described above, the present embodiment includes a ground (GND) line 81 to which the transmission mechanism section A is connected with respect to a preset reference potential point and a ground terminal 80 to which the ground line 81 is connected, as shown in FIG. 4. Furthermore, as an example of a screw member used to fix the ground terminal 80 to the second housing 12, a terminal bolt 28 is provided. The ground terminal 80 as an example of the terminal member is fixed to the second housing 12 by being sandwiched between a head portion 28A of the terminal bolt 28 and the second housing 12.

As shown in FIG. 4, the second housing 12 as an example of a housing has an upper surface 181 as an example of a first outer surface. The upper surface 181 is formed along a radial direction of the terminal bolt 28. Furthermore, a side surface 183 is provided on the second housing 12 according to the present embodiment. The side surface 183 as an example of a second outer surface is connected to the upper surface 181 and disposed along an axial direction of the terminal bolt 28. Additionally, the present embodiment includes the upper surface 181 and the side surface 183 so that the upper surface 181 and the side surface 183 are orthogonal to each other.

The present embodiment further includes a support surface 182 positioned lower than the upper surface 181 to support the ground terminal 80 from below. The support surface 182 as an example of a third outer surface is connected to the upper surface 181 via a step 187 and positioned lower than the upper surface 181. In addition, the support surface 182 is disposed to extend along the radial direction of the terminal bolt 28.

Furthermore, according to the present embodiment, a threaded screw hole 182A functioning as an internal thread is formed on the support surface 182, and a shaft (not shown in the drawings) of the terminal bolt 28 is fixed in the threaded screw hole 182A to fix the terminal bolt 28 to the second housing 12.
According to the present embodiment, a separating distance L between the upper surface 181 and the support surface 182 is larger than the thickness of the ground terminal 80. Thus, according to the present embodiment, the ground terminal 80 is positioned below the upper surface 181 as shown in FIG. 4.

Now, the ground terminal 80 will be described. The ground terminal 80 is shaped like a plate and includes a terminal main body 80A sandwiched between the support surface 182 of the second housing 18 and the head portion 28A of the terminal bolt 28. The terminal main body 80A as an example of a first area includes a through-hole (not shown in the drawings) through which the shaft of the terminal bolt 28 is passed. Additionally, according to the present embodiment, the terminal main body 80A is disposed to extend in the radial direction of the terminal bolt 28.

Furthermore, the ground terminal 80 according to the present embodiment is bent and includes a bent portion 80C. The ground terminal 80 further includes an abutting portion 80B provided to extend downward, in FIG. 4, from the bent portion 80C and which is brought into abutting contact with the side surface 183 of the second housing 18. According to the present embodiment, the abutting portion 80B, functioning as a second area, and the terminal main body 80A are provided substantially orthogonally to each other (so as to cross each other substantially at right angles). The ground terminal 80 appears to be L-shaped as viewed in a direction shown by arrow 4A in FIG. 4.

According to the present embodiment, when the terminal bolt 28 is mounted, the ground terminal 80 operates to rotate in conjunction with rotation of the terminal bolt 28. In this case, according to the present embodiment, a side edge 80E of the abutting portion 80B formed like a pilate comes into abutting contact with the side surface 183 as an example of an abutted portion, as shown in FIG. 4. At this time, a side edge 80F of the terminal main body 80A also formed like a plate also comes into abutting contact with the side surface 183. Moreover, a corner portion 80G (positioned at the bent portion 80C) of the ground terminal 80 comes into contact with the side surface 183. Thus, according to the present embodiment, the rotation of the ground terminal 80 is regulated.

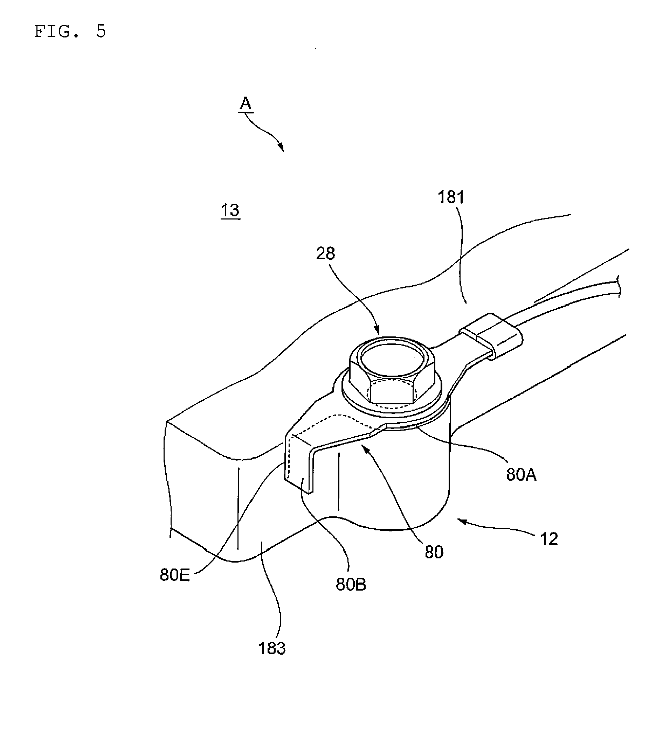

### FIG. 5 is a diagram showing a comparative example of the ground terminal 80 and the second housing 12.

In the comparative example shown in FIG. 5, the terminal main body 80A is provided above the upper surface 181 of the second housing 12. In this case, only the side edge 80E of the abutting portion 80B comes into abutting contact with the side surface 183 of the second housing 12 as shown in FIG. 5.

When only the side edge 80E of the abutting portion 80B comes into abutting contact with the side surface 183 of the second housing 12, not only a shear force but also a bending moment acts on the ground terminal 80. In this case, the ground terminal 80 is deformed more easily than when only the shear force acts on the ground terminal 80. Furthermore, if such deformation occurs easily, the terminal bolt 28 needs to be further rotated, making a torque needed to fix the terminal bolt 28 likely to increase.
On the other hand, according to the present embodiment, not only the side edge 80E of the abutting portion 80B but also the side edge 80F of the terminal main body 80A come into abutting contact with the side surface 183 of the second housing 12 as described above. In this case, the bending moment is unlikely to act on the ground terminal 80, hindering the ground terminal 80 from being deformed.

The aspect in which only the ground terminal 80 is fixed by the terminal bolt 28 has been described above by way of example. However, when a fastened article is fastened to the second housing 12, the ground terminal 80 may be fixed together with the fastened article. In addition, the above-described aspect in which the ground terminal 80 is fixed using the dedicated bolt is illustrative, and the ground terminal 80 may be fixed using a bolt used to fix another fastened article. In this case, the fastened article and the ground terminal 80 are fixed together by, for example, placing the fastened article and the ground terminal 80 between the housing and the head portion of the bolt.

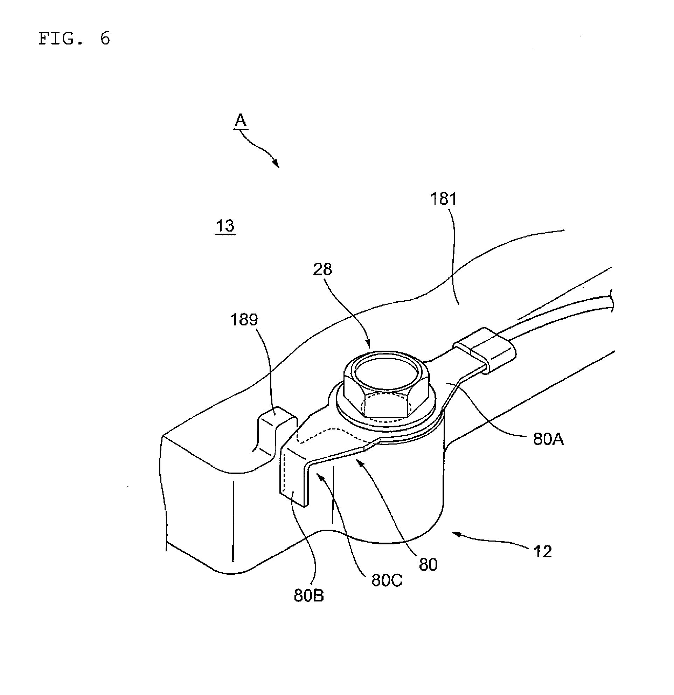

In the embodiment shown in FIG. 4, the support surface 182 is provided lower than the upper surface 181 to locate the ground terminal 80 lower than the upper surface 181 so that not only the abutting portion 80B but also the terminal main body 80A comes into abutting contact with the second housing 12.
In this case, the abutting contact of the abutting portion 80B and the terminal main body 80A with the second housing 12 can be achieved by providing a projecting portion 189 projecting from the upper surface 181 (outer surface) as shown in FIG. 6 (a diagram showing another example of configuration of the second housing 12).

The configuration in which the abutting portion 80B is provided on the ground terminal 80 has been described. However, the abutting portion 80B may be omitted, and exclusively the side edge 80F (see FIG. 4) of the terminal main body 80A may be brought into abutting contact with the projecting portion 189.

This configuration involves a reduced contact area between the ground terminal 80 and the second housing 12 and thus an increased load per unit area compared to a configuration in which both the terminal main body 80A and the abutting portion 80B are brought into contact with the second housing 12. In this case, the ground terminal 80 is deformed more easily than when a lighter load acts per unit area. When not only the terminal main body 80A but also the abutting portion 80B is brought into abutting contact as is the case with the present embodiment, the load acting per unit area decreases to allow possible deformation of the ground terminal 80 to be more easily suppressed.

Furthermore, when the abutting portion 80B is provided and the ground terminal 80 is configured such that the abutting portion 80B and the terminal main body 80A are in a crossing (orthogonal) relation, the contact area between the ground terminal 80 and the second housing 12 can be increased with an increase in the width dimension (the dimension in a direction shown by arrow 4B in FIG. 4) of the ground terminal 80 suppressed.

Even in the configuration in which only the terminal main body 80A is brought into contact, increasing the length of the ground terminal 80 (increasing the dimension of the ground terminal 80 in a direction shown by arrow 4B) allows an increase in the contact area between the ground terminal 80 and the second housing 12. However, in this case, the width dimension of the ground terminal 80 is likely to increase.
On the other hand, in the configuration according to the present embodiment, the ground terminal 80 is disposed such that a part of the ground terminal 80 (the part in which the abutting portion 80B is provided) extends in an up-down direction. This allows an increase in the contact area between the ground terminal 80 and the second housing 12 with an increase in the width dimension of the ground terminal 80 suppressed.

The configuration in which the abutting portion 80B is provided so as to extend downward in FIG. 4 has been described above by way of example. However, when the configuration shown in FIG. 6 is adopted, the abutting portion 80B may be provided so as to extend upward in FIG. 6.

Furthermore, the aspect in which the terminal main body 80A and the abutting portion 80B are disposed in the orthogonal relation has been described above (the aspect in which the angle between the terminal main body 80A and the abutting portion 80B is 90° has been described above). However, the angle between the terminal main body 80A and the abutting portion 80B may be obtuse or acute.

The width dimension (the dimension shown by arrow 4B in FIG. 4) of the ground terminal 80 may be set shorter by arranging the terminal main body 80A and the abutting portion 80B orthogonally to each other or so as to subtend an acute angle between the terminal main body 80A and the abutting portion 80B than by arranging the terminal main body 80A and the abutting portion 80B so as to subtend an obtuse angle between the terminal main body 80A and the abutting portion 80B.
The case where the abutting portion 80B is shaped like a plate has been described above. However, a circular arc shape such as a C shape may be applied to the abutting portion 80B.
Furthermore, as described above, the terminal main body 80A and the abutting portion 80B are brought into direct abutting contact with the second housing 12. However, the terminal main body 80A and the abutting portion 80B may be brought into abutting contact with the second housing 12 with other members interposed between the second housing 12 and the terminal main body 80A and between the second housing 12 and the abutting portion 80B.

## Claims

1. A steering apparatus comprising:
a housing accommodating a steering function section;
a terminal member fixed to the housing; and
a screw member having a head portion and fixing the terminal member to the housing, with the terminal member being sandwiched between the head portion and the housing, wherein
the terminal member has:
a first area sandwiched between the head portion of the screw member and the housing and disposed to extend in a radial direction of the screw member; and
a second area connected to the first area and disposed to extend in a direction different from the direction in which the first area extends, and
when the terminal member rotates in conjunction with rotation of the screw member, the first area and the second area come into abutting contact with a side of the housing.

2. The steering apparatus according to claim 1, wherein
the housing comprises: a first outer surface extending along the radial direction of the screw member; a second outer surface connected to the first outer surface and extending along an axial direction of the screw member; and a third outer surface connected to the first outer surface via a step, disposed at a position lower than the first outer surface and extending in the radial direction of the screw member,
the first area and the second area of the terminal member are configured to come into abutting contact with the second outer surface of the housing, and
the first area is supported by the third outer surface and is disposed closer to the third outer surface than to the first outer surface, so that the first area comes into abutting contact with the second outer surface.

3. The steering apparatus according to claim 1, wherein
the first area of the terminal member is disposed along an outer surface of the housing,
a projecting portion is formed on the outer surface of the housing, and
the first area is brought into abutting contact with the projecting portion formed on the outer surface of the housing so that the first area comes into abutting contact with the side of the housing.

4. The steering apparatus according to any one of claims 1 to 3, wherein the terminal member is configured so that a direction in which the first area extends is orthogonal to a direction in which the second area extends, or the terminal member is configured so that an angle between the direction in which the first area extends and the direction in which the second area extends is an acute angle.

5. A steering apparatus to which a terminal member is attached, the terminal member having a first area disposed to extend in one direction and a second area connected to the first area and disposed to extend in a direction different from the direction in which the first area extends,
wherein the steering apparatus comprises:
a housing to which the first area of the terminal member is fixed by a screw member; and
an abutted portion with which the first area and the second area of the terminal member come into abutting contact when the terminal member rotates in conjunction with rotation of the screw member.
